# EUROPEAN PATENT APPLICATION

(11) **EP 4 635 758 A1**
(43) Date of publication of application: **22.10.2025**
(21) Application number: 24171388.2
(22) Date of filing: 19.04.2024
(51) Int. Cl.: B60D 1/01, B60D 1/62, B60P 1/04

(54) **METHOD AND SYSTEM FOR PREVENTING TIPPING OVER OF A VEHICLE COMBINATION COMPRISING A TRACTOR AND A TIPPING TRAILER**

(71) Applicant: VOLVO TRUCK CORPORATION, 405 08 Göteborg (SE)
(72) Inventor: VALLERVY, Axel, 424 70 Olofstorp (SE); HELLGREN, Jakob, 438 34 Landvetter (SE)
(74) Representative: Zacco Sweden AB

(57) **Abstract**

A computer-implemented method (300) performed by a system for preventing tipping over of a vehicle combination (100) comprising a tractor (101) and a tipping trailer (102) before or during a tipping operation, wherein the tractor (101) comprises a fifth wheel (105), the method (300) comprising:
- obtaining, from fifth wheel sensors (105a, 105b) attached to either lateral side of the fifth wheel (105), a current tractor lateral force distribution,
- triggering a safety stop of an ongoing tipping operation if a difference between a nominal tractor lateral force distribution and the current tractor lateral force distribution increases towards a tractor tipping roll-over threshold value, or
- preventing initiation of a tipping operation if the difference between a nominal tractor lateral force distribution and a current tractor lateral force distribution is above the tractor tipping roll-over threshold value.

## Description

### TECHNICAL FIELD

The disclosure relates generally to tipping vehicle/s, especially vehicle combinations comprising a tractor and a tipping trailer. In particular aspects, the disclosure relates to a method and system for preventing tipping over of a vehicle combination comprising a tractor and a tipping trailer. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

During construction works of roads, buildings and similar, large amounts of material needs to be handled and moved. A commonly used vehicle is a tipping vehicle on which material be loaded in one location and unloaded in another location. One example of a tipping vehicle is a vehicle combination comprising a tractor and a tipping trailer. In many instances, the material is a granular material and or material that may stick to the sides of a bed of the tipping trailer such as soil, mud, sand and construction aggregates. Such materials may stick to the sides of the bed, for instance in moist or wet conditions.

If the conditions are such that the granular material sticks together and/or sticks to the sides of the bed of the tipping trailer, it can become a problem to discharge it from the tipping trailer. As the bed of the tipping trailer raises, material being stuck to the sides of the bed will not be discharged evenly. This may lead to situations where a lot of material can suddenly and unevenly be discharged. This can lead to dangerous situations that can lead to rollover situation.

Rigid trucks, i.e. a truck chassis with a dump body mounted to the frame, have roll over stability systems that can warn an operator if a roll over or another dangerous situation is imminent. However, such systems do not cover a tractor/trailer vehicle combination and is also not an integrated system in an original equipment manufacturer (OEM) product.

There is thus room for improvement within this field.

### SUMMARY

According to a first aspect of the disclosure, a computer-implemented method performed by a system for preventing tipping over of a vehicle combination comprising a tractor and a tipping trailer before or during a tipping operation, wherein the tractor comprises a fifth wheel to which the trailer is connected, comprises:
- obtaining, from fifth wheel sensors attached to opposite lateral sides of the fifth wheel, a current tractor lateral force distribution, indicating a lateral distribution of the force exerted on the tractor's fifth wheel by the tipping trailer,
- triggering a safety stop of an ongoing tipping operation if a difference between a nominal tractor lateral force distribution and the current tractor lateral force distribution increases towards a tractor tipping roll-over threshold value, or
- preventing initiation of a tipping operation if the difference between the nominal tractor lateral force distribution and the current tractor lateral force distribution exceeds the tractor tipping roll-over threshold value. The first aspect of the disclosure may seek to remove or reduce the risk of unwanted tipping over of a vehicle combination comprising a tractor and a tipping trailer before or during a tipping operation. A technical benefit may include to reduce the risk of tipping over by measuring a lateral force distribution of the tractor by installing sensors in the fifth wheel. A technical benefit may include that by monitoring the forces applied on the fifth wheel, it is possible to either trigger a safety stop to prevent further tipping or to prevent initiation of tipping in order to remove or reduce the risk of the vehicle combination tipping over.

Optionally in some examples, including in at least one preferred example, the method comprises:
- determining a nominal tractor lateral force distribution from the tractor's factory specifications. A technical benefit may include that it is possible already before and during construction of the tractor to determine a nominal tractor lateral force distribution in order to set up parameters for the method to determine when triggering of the safety stop or prevention of initiation of tipping should take place.

Optionally in some examples, including in at least one preferred example, the method comprises:
- obtaining a nominal tractor lateral force distribution from the fifth wheel sensors when the vehicle combination is positioned on flat ground. A technical benefit may include that the nominal tractor lateral force distribution can continuously be updated, for instance if any upgrades have been made to the tractor after leaving the factory.

Optionally in some examples, including in at least one preferred example, the method comprises:
- obtaining the current tractor lateral force distribution from sensors in the fifth wheel and from the tractor's tyre pressure sensor or air suspension pressure sensors. A technical benefit may include that this will provide a more detailed measurement of the current tractor lateral force distribution.

Optionally in some examples, including in at least one preferred example, the method comprises:
- determining the difference between the nominal tractor lateral force distribution and the current tractor lateral force distribution in an electronic control unit in the tractor. A technical benefit may include that the vehicle combination does not have remote access to for instance a cloud service or similar where the difference is determined. It is of course possible for the difference to be determined remotely, for example in a digital twin model.

According to a second aspect of the disclosure, a system for preventing tipping over of a vehicle combination comprising a tractor and a tipping trailer before or during a tipping operation, for a tractor comprising a fifth wheel to which the trailer is connected, comprises a processing circuitry and a memory, the processing circuitry being configured to:
- obtain, from fifth wheel sensors attached to opposite lateral sides of the fifth wheel, a current tractor lateral force distribution, indicating a lateral distribution of the force exerted on the tractor's fifth wheel by the tipping trailer,
- determine a difference between a nominal tractor lateral force distribution and a current tractor lateral force distribution,
- compare the difference with a tractor tipping roll-over threshold value,
- trigger a safety stop of an ongoing tipping operation if the difference increases towards the tractor tipping roll-over threshold value, or
- prevent initiation of a tipping operation if the difference exceeds the tractor tipping roll-over threshold value. The second aspect of the disclosure may seek to remove or reduce the risk of unwanted tipping over of a vehicle combination comprising a tractor and a tipping trailer before or during a tipping operation. A technical benefit may include that by monitoring the forces applied on the fifth wheel, it is possible to either trigger a safety stop to prevent further tipping or to prevent initiation of tipping in order to remove or reduce the risk of the vehicle combination tipping over.

Optionally in some examples, including in at least one preferred example, the processing circuitry is configured to:
- determine a nominal tractor lateral force distribution from the tractor's factory specifications. A technical benefit may include that it is possible already before and during construction of the tractor to determine a nominal tractor lateral force distribution in order to set up parameters for the system to determine when triggering of the safety stop or prevention of initiation of tipping should take place.

Optionally in some examples, including in at least one preferred example, the processing circuitry is configured to:
- obtain a nominal tractor lateral force distribution from the fifth wheel sensors when the vehicle combination is positioned on flat ground. A technical benefit may include that the nominal tractor lateral force distribution can continuously be updated, for instance if any upgrades have been made to the tractor after leaving the factory.

Optionally in some examples, including in at least one preferred example, the processing circuitry is configured to:
- obtain a current tractor lateral force distribution from fifth wheel sensors and from the tractor's tyre pressure sensors or air suspension pressure sensors. A technical benefit may include that this will provide a more detailed measurement of the current tractor lateral force distribution.

Optionally in some examples, including in at least one preferred example, the processing circuitry is configured to:
- determine the difference in an electronic control unit in the tractor. A technical benefit may include that the vehicle combination does not have remote access to for instance a cloud service or similar where the difference is determined. It is of course possible for the difference to be determined remotely, for example in a digital twin model.

Optionally in some examples, including in at least one preferred example, the tractor comprises fifth wheel sensors arranged in the fifth wheel on either lateral side.

Optionally in some examples, including in at least one preferred example, the fifth wheel sensors are strain gauges.

Optionally in some examples, including in at least one preferred example, the fifth wheel sensors are accelerometers.

Optionally in some examples, including in at least one preferred example, the fifth wheel sensors are yaw rate sensors.

According to a third aspect of the disclosure, a computer program product comprises program code for performing, when executed by the processing circuitry, the method of the first aspect.

According to a fourth aspect of the disclosure, a non-transitory computer-readable storage medium comprises instructions, which when executed by the processing circuitry, cause the processing circuitry to perform the method of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIGS. 1a and 1b** show an exemplary overview of a vehicle combination comprising a tractor and a tipping trailer before start of tipping, together with an overview of fifth wheel sensors and tyre pressure sensor or air suspension pressure sensors.
**FIGS. 2a and 2b** show an exemplary overview of a vehicle combination comprising a tractor and a tipping trailer during tipping, together with an overview of fifth wheel sensors and tyre pressure sensor or air suspension pressure sensors.
**FIG. 3** is a flowchart depicting embodiments of a method for preventing tipping over of a vehicle combination comprising a tractor and a tipping trailer before or during a tipping operation according to some embodiments.
**FIG. 4** is a schematic block diagram depicting embodiments of a system.
**FIG. 5** is a schematic diagram of an exemplary computer system for implementing embodiments disclosed herein according to some embodiments.

### DETAILED DESCRIPTION

The detailed description set forth below provides information and examples of the disclosed technology with sufficient detail to enable those skilled in the art to practice the disclosure.

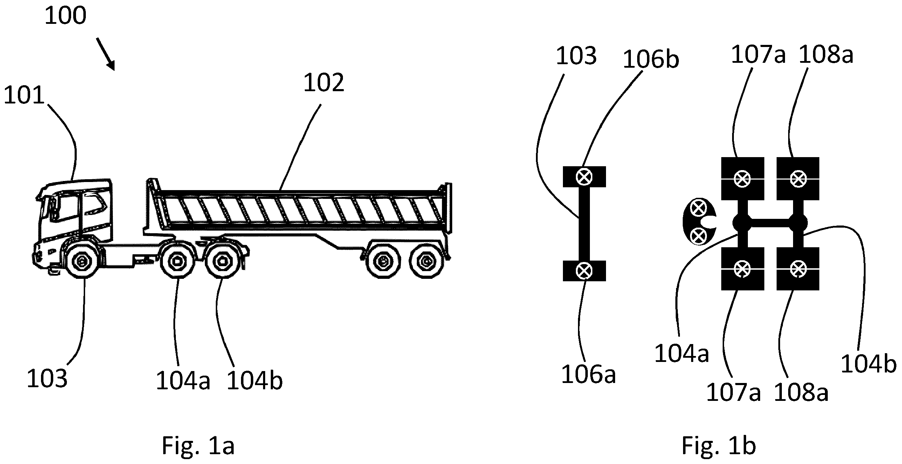

**FIG. 1a** show an exemplary overview of a vehicle combination **100** comprising a tractor **101** and a tipping trailer **102** before start of tipping. **FIG. 1b** shows an exemplary overview of the tractor **101** of the vehicle combination **100** with its fifth wheel sensors and tyre pressure sensor or air suspension pressure sensors indicated.

The tractor **101** in **FIGS. 1a** and **1b** comprises a forward axle **103** and two rear axles **104a, 104b.** In the example of **FIG. 1****,** the forward axle **103** comprises one wheel on each side and the rear axles **104a, 104b** each comprise two wheels on either side. This may vary depending on the tractor model. Power generation and power distribution between the axles may vary depending on the tractor model and is not discussed further.

The tractor **101** is equipped with a standard air suspension system with accompanying air suspension pressure sensors. The tractor may also comprise standard tyre pressure sensors. The tractor comprises a fifth wheel **105** in order to connect the tractor **101** to the tipping trailer **102.** In **FIG. 1a****,** the vehicle combination **100** is standing on level ground with a tipping bed of the tipping trailer **102** lowered. This position indicates a state before tipping has started.

**FIG. 1b** shows an overview of the tractor's axles **103, 104a, 104b,** wheels and fifth wheel **105** with sensor positions marked up. On the left side of the forward axle **103,** a left forward sensor position **106a** is indicated. A left forward sensor may be an air suspension pressure sensor and possibly also a left forward tyre pressure sensor. On the right side of the forward axle, a right forward sensor position **106b** is indicated. The right forward sensor may be an air suspension pressure sensor and possibly also a right forward tyre pressure sensor.

Moving towards the rear of the tractor **101,** connected to each lateral side of the fifth wheel **105,** a left fifth wheel sensor **105a** and a right fifth wheel sensor **105b** is arranged. The fifth wheel sensors **105a, 105b** are arranged to detect movement of the fifth wheel **105** towards either lateral side of the tractor **101** from how forces from the tipping trailer **102** connected to the fifth wheel **105** act on the fifth wheel **105.** By comparing the sensor outputs from the left and right fifth wheel sensors **105a, 105b,** it is possible to determine if the tractor **101** is leaning towards one lateral side and if there is a risk of the vehicle combination **100** tipping over sideways.

Further towards the rear of the tractor **101,** the tractor **101** comprises a first left rear sensor position **107a** and a first right rear sensor position **107b.** A first left rear sensor and a first right rear sensor may be air suspension pressure sensors and possibly tyre pressure sensors. The tractor **101** further comprises a second left rear sensor position **108a** and a second right rear sensor position **108b.** A second left rear sensor and a second right rear sensor may be air suspension pressure sensors and possibly tyre pressure sensors. In **FIG. 1b****,** the markings on the respective wheel is intended to symbolically represent each sensor or sensors. These sensors are well-known in the art and will not be described further.

The tractor **101** of the vehicle combination **100** may comprise a system comprising a processing circuitry and a memory, for instance implemented in an electronic control unit of the tractor.

As an alternative, the tractor **101** may be part of a communication system (not shown) that may comprise a wireless communications network arranged to enable the tractor **101** to wirelessly communicate with the communication system for preventing tipping over of a vehicle combination **100** comprising a tractor **101** and a tipping trailer **102** before or during a tipping operation. Communication is for instance made through a data communications transceiver arrangement connected to an antenna. The tractor **101** and the system may comprise wireless communications enabled devices that allows the tractor and the system to wirelessly communicate with each other via the wireless communications network, for instance, via one or more access points and/or radio base stations (not shown) of the wireless communications network.

The system may comprise a simulator. The simulator may be a vehicle simulation system arranged to create a simulation for a tipping vehicle, e.g. a so-called digital model or digital twin model for the tipping vehicle, at least partly based on the tipping vehicle's factory specifications. The simulation may, for example, be a statistical and/or Artificial Intelligence/Machine Learning, AI/ML, driven virtual model or replica of the same type of vehicle that the tipping vehicle is. Here, it should also be noted that a digital twin may be a digital representation of a physical or real object or process.

The system and/or the simulator may be implemented by one or more centrally located and/or distributed network units, such as, e.g. online data processing server(s). Optionally, the system and/or the simulator may also form part of a cloud service in the wireless communications network, e.g. the Internet. It should also be noted that the simulator may form part of the system, but may also not form part of the system but be co-located with the system. Hence, the processing described herein as performed by the system may be partly implemented in the simulator, in a cloud service and/or in an electronic control unit (ECU) of the tipping vehicle.

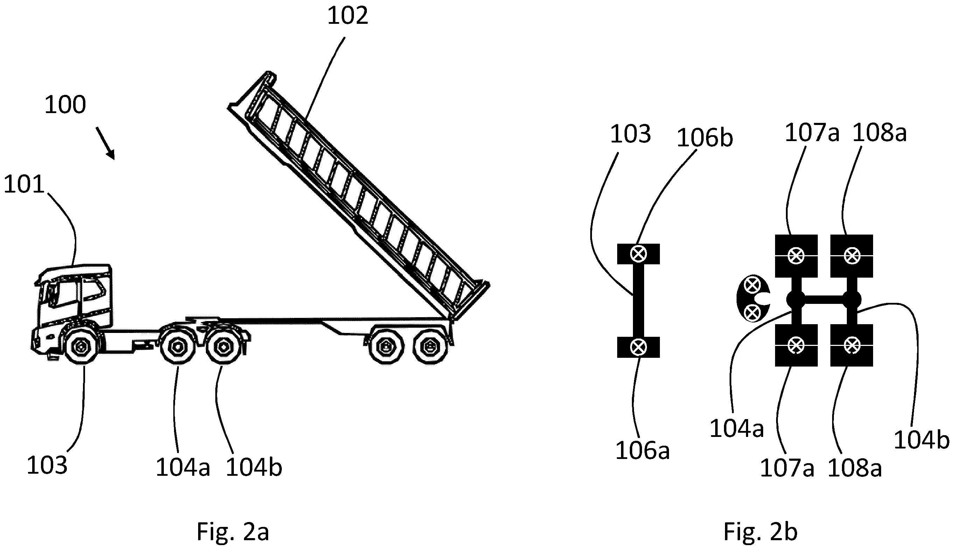

**FIGS. 2a and 2b** show an exemplary overview of a vehicle combination **100** comprising a tractor **101** and a tipping trailer **102** during tipping, together with an overview of fifth wheel sensors **105a, 105b** and air suspension pressure sensors and possibly also tyre pressure sensors as indicated by the sensor positions **106a, 106b, 107a, 107b, 108a, 108b.** **FIG. 2a** show an exemplary overview of the vehicle combination **100** comprising the tractor **101** and the tipping trailer **102** during tipping, i.e. with the tipping bed of the tipping trailer raised. **FIG. 2b** shows the same exemplary overview of the tractor **101** of the vehicle combination **100** as in **FIG. 1b****.**

For each tractor in each vehicle combination, a roll-over threshold value is determined. The roll-over threshold value may be how much the tractor can tilt in a lateral or transverse direction before the tractor falls over. The roll-over threshold can be an angle where a sensor capable of measuring angles measures the current angle of the tractor relative a horizontal surface or a pressure measured on sensors arranged in the wheels or in the axles of either the left side or the right side of the tractor. From the fifth wheel sensors **105a, 105b,** a difference or delta value corresponding to a tractor lateral force distribution, is continuously determined by taking the difference between measurements from the left side fifth wheel sensor **105a** and the right side fifth wheel sensor **105b.** The tractor lateral force distribution indicates the lateral or left/right distribution of a trailer force exerted on the tractor by a trailer coupled to the tractor. The tractor lateral force distribution thus indicates if there is an imbalance in the force distribution from the trailer between the left side and the right side. Even though an imbalance may occur from time to time, especially if the ground is uneven, the disclosure provides a way to determine if the imbalance is approaching or has exceeded a roll-over threshold.

Alternatively, the delta value corresponding to the tractor lateral force distribution can be calculated using additional sensor data from the tractor's air suspension pressure sensors and possibly also the tyre pressure sensors in order to obtain a more detailed tractor lateral force distribution.

At least the following two modes of operation are possible. In mode 1, the delta value is continuously monitored during tipping. A safety stop leading to that the tipping bed cannot be raised further is triggered before a roll-over of the vehicle combination **100** as a result of a measured tractor lateral force distribution that increases and approaches the roll-over threshold value. In mode 2, if an initial status of the delta value above the roll-over threshold value prior to tipping is measured, an initiation of tipping operations can be stopped when an unsafe condition is present when the vehicle combination is in the position of **FIG. 1****,** i.e. when the tipping bed is lowered.

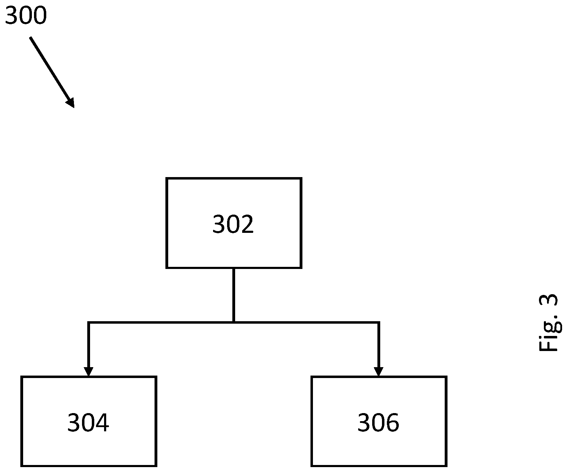

Embodiments of a computer-implemented method **300** performed by a system for preventing tipping over of a vehicle combination comprising a tractor and a tipping trailer before or during a tipping operation, will now be described with reference to the flowchart depicted in **FIG. 3. FIG. 3** is an illustrated example of actions, steps or operations which may be performed by the system described above with reference to **FIG. 1****.** The method **300** may comprise the following actions, steps or operations.

**Action 302:** The system obtains, from fifth wheel sensors attached to either lateral side of the fifth wheel, a current tractor lateral force distribution. Sensor outputs from the fifth wheel sensors indicates if there are any lateral loads from the tipping trailer acting on the tractor.

**Action 304:** The system triggers a safety stop of an ongoing tipping operation if a difference between a nominal tractor lateral force distribution and the current tractor lateral force distribution increases towards a tractor tipping roll-over threshold value. If the system identifies that lateral forces acting on the tractor are increasing and is approaching a tractor tipping roll-over threshold value, the system will prevent a further increase in lateral forces to avoid the tractor and trailer from tipping over by triggering a safety stop such that the tipping trailer cannot be raised further. Thus, the system will provide a software block of any further attempts to raise the tipping trailer. By approaching the tractor tipping roll-over threshold value is meant that the difference between a nominal tractor lateral force distribution and the current tractor lateral force distribution increases at a rate that indicates that the tractor tipping roll-over threshold value will be exceeded within a predetermined amount of time and/or that the difference increases and has reached a triggering value of at least 50 % of the tractor tipping roll-over threshold value, specifically at least 60 % of the tractor tipping roll-over threshold value, specifically at least 70 % of the tractor tipping roll-over threshold value, specifically at least 80 % of the tractor tipping roll-over threshold value or specifically at least 90 % of the tractor tipping roll-over threshold value.

As an alternative to **Action 304, Action 306:** The system prevents initiation of a tipping operation if the difference between a nominal tractor lateral force distribution and a current tractor lateral force distribution is above the tractor tipping roll-over threshold value. If the system has detected that the lateral forces acting on the tractor already before the tipping trailer has begun to rise would cause the tractor and tipping trailer to roll-over, the system will prevent the operator of the tractor to initiate a tipping operation, i.e., prevent the tipping trailer from being raised. It is possible to send an alarm to the operator at the same time in order to alert the operator of the situation such that the operator can take the necessary actions to remedy the situation.

The steps of triggering a safety stop or preventing initiation of a tipping operation may be preceded by one or both of determining a difference between a nominal tractor lateral force distribution and a current tractor lateral force distribution, and comparing the difference with a tractor tipping roll-over threshold value.

In addition to the above actions, the system may optionally according to an example determine a nominal tractor lateral force distribution from the tractor's factory specifications.

In addition to the above actions, the system may optionally according to an example obtain a nominal tractor lateral force distribution from the fifth wheel sensors when the vehicle combination is positioned on flat ground.

In addition to the above actions, the system may optionally according to an example obtain the current tractor lateral force distribution from sensors in the fifth wheel and from the tractor's tyre pressure sensor or air suspension pressure sensors.

In addition to the above actions, the system may optionally according to an example determine the difference between the nominal tractor lateral force distribution and the current tractor lateral force distribution in an electronic control unit in the tractor.

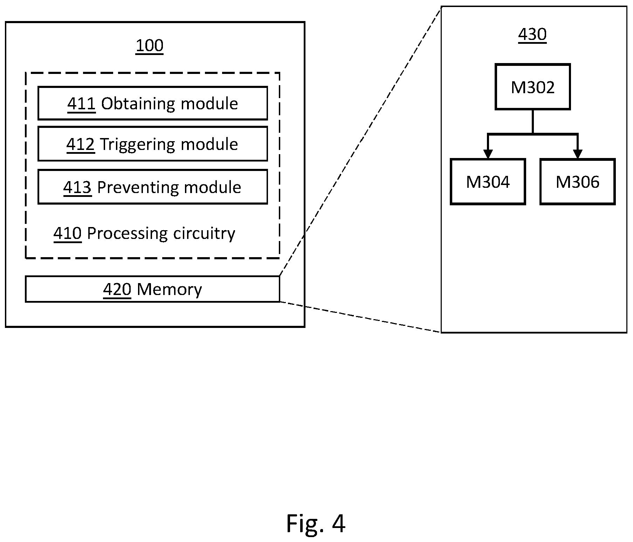

**FIG. 4** is a schematic block diagram depicting embodiments of a system. The embodiments of the system described herein may be considered as independent examples, or may be considered in any combination with each other to describe non-limiting examples. It should also be noted that, although not shown in **FIG. 4****,** it should be noted that known conventional features of a system, such as, for example, a connection to the mains, network connections (e.g. input/output ports, etc.), etc., may be assumed to be comprised in the system but is not shown or described any further in regards to **FIG. 4****.** The system may comprise one or more centrally located or distributed network unit(s), wherein the system and the one or more network unit(s) may comprise processing circuitry **410** and a memory **420.**

It should also be noted that some or all of the functionality described in the examples above as being performed by the system may be provided by the processing circuitry **410** executing instructions stored on a computer-readable medium, such as, the memory **420** shown in **FIG. 4****.** The processing circuitry **410** may also comprise an obtaining module **411,** a triggering module **412** and a preventing module **413,** each responsible for providing its functionality to support the examples described herein.

The memory **420** comprises computer code, that when loaded from memory **420** and executed by the one or more processors or processing circuitry **410,** causes the system to perform the actions, steps or operations of the methods described above.

The system or processing circuitry **410** is configured to, or may comprise the obtaining module **411** configured to obtain, from fifth wheel sensors attached to either lateral side of the fifth wheel, a current tractor lateral force distribution,

The system or processing circuitry **410** is configured to, or may comprise the triggering module **412** configured to trigger a safety stop of an ongoing tipping operation if a difference between a nominal tractor lateral force distribution and the current tractor lateral force distribution increases towards a tractor tipping roll-over threshold value.

The system or processing circuitry **410** is configured to, or may comprise the preventing module **413** configured to preventing initiation of a tipping operation if the difference between a nominal tractor lateral force distribution and a current tractor lateral force distribution is above the tractor tipping roll-over threshold value.

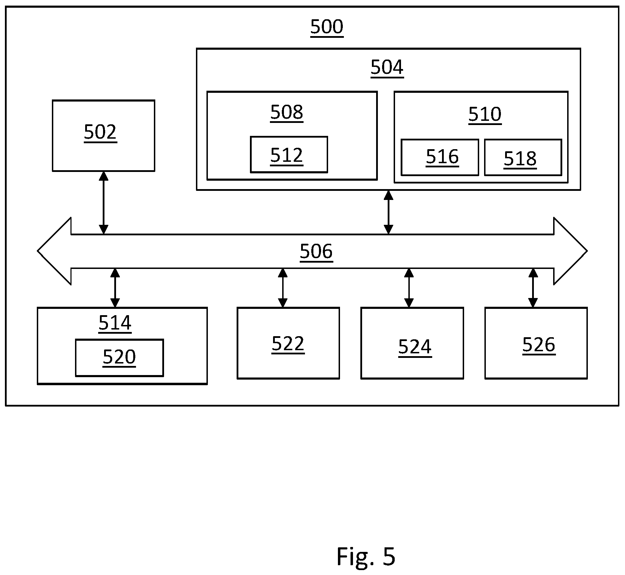

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer-implemented method performed by a system for preventing tipping over of a vehicle combination comprising a tractor and a tipping trailer before or during a tipping operation, wherein the tractor comprises a fifth wheel, the method comprising:
- obtaining, from fifth wheel sensors attached to either lateral side of the fifth wheel, a current tractor lateral force distribution,
- triggering a safety stop of an ongoing tipping operation if a difference between a nominal tractor lateral force distribution and the current tractor lateral force distribution increases towards a tractor tipping roll-over threshold value, or
- preventing initiation of a tipping operation if the difference between a nominal tractor lateral force distribution and a current tractor lateral force distribution is above the tractor tipping roll-over threshold value.

Example 2: The computer-implemented method according to example 1, wherein the method comprises:
- determining a nominal tractor lateral force distribution from the tractor's factory specifications.

Example 3: The computer-implemented method according to example 1 or 2, wherein the method comprises:
- obtaining a nominal tractor lateral force distribution from the fifth wheel sensors when the vehicle combination is positioned on flat ground.

Example 4: The computer-implemented method according to any one of the preceding examples, wherein the method comprises:
- obtaining the current tractor lateral force distribution from sensors in the fifth wheel and from the tractor's tyre pressure sensor or air suspension pressure sensors.

Example 5: The computer-implemented method according to any one of the preceding examples, wherein the method comprises:
- determining the difference between the nominal tractor lateral force distribution and the current tractor lateral force distribution in an electronic control unit in the tractor.

Example 6: A system for preventing tipping over of a vehicle combination comprising a tractor and a tipping trailer before or during a tipping operation, for a tractor comprising a fifth wheel, the system comprising a processing circuitry and a memory, the processing circuitry being configured to:
- obtain, from fifth wheel sensors attached to either lateral side of the fifth wheel, a current tractor lateral force distribution,
- determine a difference between a nominal tractor lateral force distribution and a current tractor lateral force distribution,
- compare the difference with a tractor tipping roll-over threshold value,
- trigger a safety stop of an ongoing tipping operation if the difference increases towards the tractor tipping roll-over threshold value, or
- prevent initiation of a tipping operation if the difference is above the tractor tipping roll-over threshold value.

Example 7: The system according to example 6, wherein the processing circuitry is configured to:
- determine a nominal tractor lateral force distribution from the tractor's factory specifications.

Example 8: The system according to example 6 or 7, wherein the processing circuitry is configured to:
- obtain a nominal tractor lateral force distribution from the fifth wheel sensors when the vehicle combination is positioned on flat ground.

Example 9: The system according to any one of examples 6-8, wherein the processing circuitry is configured to:
- obtain a current tractor lateral force distribution from fifth wheel sensors and from the tractor's tyre pressure sensors or air suspension pressure sensors.

Example 10: The system according to any one of examples 6-9, wherein the processing circuitry is configured to:
- determine the difference in an electronic control unit in the tractor.

Example 11: A tractor comprising a system according to any one of examples 6-10, wherein the tractor comprises fifth wheel sensors arranged in the fifth wheel on either lateral side.

Example 12: The tractor according to example 11, wherein the fifth wheel sensors are strain gauges.

Example 13: The tractor according to example 11, wherein the fifth wheel sensors are accelerometers.

Example 14: The tractor according to example 11, wherein the fifth wheel sensors are yaw rate sensors.

Example 15: A computer program product comprising program code for performing, when executed by the processing circuitry, the method of any of examples 1-5.

Example 16: A non-transitory computer-readable storage medium comprising instructions, which when executed by the processing circuitry, cause the processing circuitry to perform the method of any of examples 1-5.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer-implemented method (300) performed by a system for preventing tipping over of a vehicle combination (100) comprising a tractor (101) and a tipping trailer (102) before or during a tipping operation, wherein the tractor (101) comprises a fifth wheel (105) to which the trailer (102) is connected, the method (300) comprising:
- obtaining, from fifth wheel sensors (105a, 105b) attached to opposite lateral sides of the fifth wheel (105), a current tractor lateral force distribution, indicating a lateral distribution of the force exerted on the tractor's (101) fifth wheel (105) by the tipping trailer (102),
- triggering a safety stop of an ongoing tipping operation if a difference between a nominal tractor lateral force distribution and the current tractor lateral force distribution increases towards a tractor tipping roll-over threshold value, or
- preventing initiation of a tipping operation if the difference between the nominal tractor lateral force distribution and the current tractor lateral force distribution exceeds the tractor tipping roll-over threshold value.

2. The computer-implemented method (300) according to claim 1, wherein the method (300) comprises:
- determining the nominal tractor lateral force distribution from the tractor's factory specifications.

3. The computer-implemented method (300) according to claim 1 or 2, wherein the method (300) comprises:
- obtaining the nominal tractor lateral force distribution from the fifth wheel sensors (105a, 105b) when the vehicle combination (100) is positioned on flat ground.

4. The computer-implemented method (300) according to any one of the preceding claims, wherein the method (300) comprises:
- obtaining the current tractor lateral force distribution from the fifth wheel sensors (105a, 105b) and from the tractor's tyre pressure sensors (106a, 106b, 107a, 107b, 108a, 108b) and/or air suspension pressure sensors (106a, 106b, 107a, 107b, 108a, 108b).

5. The computer-implemented method (300) according to any one of the preceding claims, wherein the method (300) comprises:
- determining the difference between the nominal tractor lateral force distribution and the current tractor lateral force distribution in an electronic control unit in the tractor (101).

6. A system for preventing tipping over of a vehicle combination (100) comprising a tractor (101) and a tipping trailer (102) before or during a tipping operation, for a tractor (101) comprising a fifth wheel (105) to which the trailer (102) is connected, the system comprising a processing circuitry (410) and a memory (420), the processing circuitry (410) being configured to:
- obtain, from fifth wheel sensors (105a, 105b) attached to opposite lateral sides of the fifth wheel (105), a current tractor lateral force distribution, indicating a lateral distribution of the force exerted on the tractor's (101) fifth wheel (105) by the tipping trailer (102),
- determine a difference between a nominal tractor lateral force distribution and a current tractor lateral force distribution,
- compare the difference with a tractor tipping roll-over threshold value,
- trigger a safety stop of an ongoing tipping operation if the difference increases towards the tractor tipping roll-over threshold value, or
- prevent initiation of a tipping operation if the difference exceeds the tractor tipping roll-over threshold value.

7. The system according to claim 6, wherein the processing circuitry (410) is configured to:
- determine the nominal tractor lateral force distribution from the tractor's factory specifications.

8. The system according to claim 6 or 7, wherein the processing circuitry (410) is configured to:
- obtain the nominal tractor lateral force distribution from the fifth wheel sensors (105a, 105b) when the vehicle combination (100) is positioned on flat ground.

9. The system according to any one of claims 6-8, wherein the processing circuitry (410) is configured to:
- obtain the current tractor lateral force distribution from fifth wheel sensors (105a, 105b) and from the tractor's (101) tyre pressure sensors (106a, 106b, 107a, 107b, 108a, 108b) and/or air suspension pressure sensors (106a, 106b, 107a, 107b, 108a, 108b).

10. The system according to any one of claims 6-9, wherein the processing circuitry (410) is configured to:
- determine the difference in an electronic control unit in the tractor (101).

11. A tractor (101) comprising a system according to any one of claims 6-10, wherein the tractor (101) comprises fifth wheel sensors (105a, 105b) arranged in the fifth wheel (105) on either lateral side.

12. The tractor (101) according to claim 11, wherein the fifth wheel sensors (105a, 105b) are strain gauges.

13. The tractor (101) according to claim 11, wherein the fifth wheel sensors (105a, 105b) are accelerometers.

14. The tractor (101) according to claim 11, wherein the fifth wheel sensors (105a, 105b) are yaw rate sensors.

15. A computer program product (430) comprising program code for performing, when executed by the processing circuitry (410), the method (300) of any of claims 1-5.

16. A non-transitory computer-readable storage medium comprising instructions, which when executed by the processing circuitry (410), cause the processing circuitry (410) to perform the method (300) of any of claims 1-5.
